# EUROPÄISCHE PATENTSCHRIFT

(11) **EP 0 453 715 B1**
(45) Veröffentlichungstag und Bekanntmachung des Hinweises auf die Patenterteilung: **03.01.1996**
(21) Anmeldenummer: 91101638.4
(22) Anmeldetag: 07.02.1991
(51) Int. Cl.: B29C 51/42

(54) **Vorrichtung zum Tiefziehen einer offenen Schale**
Apparatus for deep-drawing of an open shell
Dispositif pour l'emboutissage d'une coquille ouverte

(30) Priorität: 26.02.1990 DE 4005972
(43) Veröffentlichungstag der Anmeldung: 30.10.1991
(73) Patentinhaber: Tetra Laval Holdings & Finance SA, CH-1009 Pully (CH)
(72) Erfinder: Reil, Wilhelm, W-6140 Bensheim (DE); Deutschbein, Ulrich, W- 6109 Mühltal (DE); Liebram, Udo, W-6102 Pfungstadt (DE); Knobloch, Gerd, W-6103 Griesheim (DE)
(74) Vertreter: Weber, Dieter, Dr.

(56) Entgegenhaltungen:
- GB-A- 2 175 868
- PATENT ABSTRACTS OF JAPAN vol. 11, no. 94 (M-574)(2541) 25. März 1987 & JP-A-61 246 038 (MAZDA MOTOR CO.)

## Beschreibung

Die Erfindung betrifft eine Vorrichtung zum Verformen eines Zuschnittes aus tiefziehfähigem Kunststoff mit relativ zueinander bewegbaren Formwerkzeug und Gegenbacken, wobei als Gegenbacken und zur Vorwärmung des Zuschnittes eine an einem beheizbaren Hauptträger befestigte, Vakuum- und/oder Druckeinrichtungen aufweisende, vordere Hauptsaugplatte vorgesehen ist, welche zusammen mit dem beheizbaren Hauptträger zum Transportieren des Zuschnittes in Vorschubrichtung als Vorschubwärmebacken in eine Richtung senkecht zur Bewegungsrichtung des Formwerkzeuges mittels einer Hubvorrichtung intermittierend bewegbar ist.

Eine Vorrichtung der eingangs genannten Art ist aus dem Patent Abstract of Japan, Band 11, Nr. 94, bekannt. Dort wird eine extrudierte Bahn geschnitten und auf einem horizontalen Förderband angelegt. Dieser Zuschnitt wird von einem beheizbaren Hauptträger mit einer vorderen Hauptsaugplatte durch Vakuumeinrichtungen angesaugt, vorgewärmt und in eine Vorschubrichtung über ein Formwerkzeug bewegt und danach mittels einer Bewegung senkrecht zur Vorschubrichtung in das Formwerkzeug gebracht, das als Preßstempel ausgebildet ist und eine gewellte Oberflächenkontur hat. Auf diese Weise kann der etwa plattenförmige Zuschnitt durch Preßformen eine z.B. gewellte Gestalt erhalten. Das Abgeben des Zuschnittes von der am Hauptträger angebrachten Hauptsaugplatte erfolgt durch Abblasen mittels Druckluft.

Die bekannte Preßformvorrichtung eignet sich nicht zum Tiefziehen und weist nur eine Hauptsaugplatte auf, die einen Zuschnitt nur bei der intermittierenden Bewegung in Vorschubrichtung fördern kann. Die Leistung einer solchen Vorrichtung ist daher beschränkt. Wollte man diese bekannte Vorrichtung für das Tiefziehen umgestalten, so würde man sicher die im allgemeinen Stand der Technik übliche Kühlhaltung von Randbereichen eines Zuschnittes besorgen, um die rahmenförmig außen härteren Halteteile zum Greifen und Transportieren zu haben.

Es sind schon Versuche mit einer Vorrichtung zum Tiefziehen einer einseitig offenen Schale unternommen worden. Mit dieser Vorrichtung werden aus einem bahnförmigen Material taktweise eine offene Schale nach der anderen tiefgezogen, ausgeformt und zu weiteren Verarbeitungsstationen geführt. Diese Tiefziehvorrichtungen haben aber unter anderem zwei wesentliche Nachteile.

Der erste besteht darin, daß das bahnförmige Material längere Zeit für den Tiefziehvorgang angehalten werden muß, weil die Mindestzeit zur vollständigen Durchwärmung des tiefziehfähigen Kunststoffes nicht unterschritten werden kann. Erst nach dem vollständigen Durchwärmen kann der Tiefziehvorgang durchgeführt werden. Damit ist die Leistung einer solchen Maschine, d.h. die Anzahl der gefertigten Produkte pro Zeiteinheit, unvermeidlich einer oberen Grenze unterworfen.

Der zweite Nachteil besteht darin, daß das bahnförmige Material stets längs eines rahmenförmigen Streifens, welcher sich um die tiefgezogene Schale herumzieht, einerseits zum Halten und damit zur Ermöglichung des Tiefziehvorganges notwendig ist, andererseits aber nach Erstellung des fertigen Produktes in aller Regel störend oder überflüssig ist und dann abgeschnitten werden muß. Zwar ist man bei Tiefziehvorrichtungen schon dazu übergegangen, die tiefgezogene Schale auszustanzen und die rahmenförmigen Streifen an der Bahn zu belassen und diese aufzurollen und gegebenenfalls sogar wieder einzuschmelzen, um das Material zu verwenden. Dieses Ausstanzen des Produktes von der Materialbahn, Aufrollen der Restgitter, gegebenenfalls abermaliges Einschmelzen usw. sind aber zusätzliche und daher aufwendige Verfahrensschritte.

Der Erfindung liegt daher die Aufgabe zugrunde, eine Vorrichtung der eingangs genannten Art so zu verbessern, daß sie zum Tiefziehen geeignet wird und dabei die Maschinenleistung in dem Sinne verbessert wird, als der Ausstoß der Anzahl fertiger Produkte pro Zeiteinheit vergrößert wird, und darüberhinaus trotz des Tiefziehvorganges der Abfall geringer gemacht und möglichst vermieden wird und ferner die äußerst schwierige Handhabung der thermoplastischen Kunststoffbahn durch stetige Unterstützung wesentlich erleichtert wird.

Diese Aufgabe wird erfindungsgemäß bei der eingangs genannten Vorrichtung dadurch gelöst, daß zum Tiefziehen einer einseitig offenen Schale aus dem Zuschnitt das Formwerkzeug ein Tiefziehwerkzeug ist, daß im Abstand von der vorderen Hauptsaugplatte am Hauptträger mindestens eine weitere mittlere Hauptsaugplatte als Vorschubwärmebacken befestigt ist und daß neben dem Tiefziehwerkzeug und im Abstand von diesem an seiner Außenseite ein parallel zu dessen Bewegungsrichtung intermittierend bewegbarer Außenwärmebacken mit Außenträger und Außensaugplatte derart angeordnet ist, daß der Außenwärmebacken zur Aufnahme des Zuschnittes von der jeweils in Vorschubrichtung hinteren bzw. mittleren Hauptsaugplatte und dann zur Übergabe auf die jeweilige vordere Hauptsaugplatte vorgesehen ist; - daß der Hauptträger zur Bewegung des Zuschnittes von der hinteren Position dient, in welcher die Außensaugplatte arbeitet, zu einer vorderen Position, in welcher das Tiefziehwerkzeug arbeitet; und - daß Außensaugplatte und Hauptsaugplatte für die zusätzliche Erwärmung des Zuschnittes beim Vorerwärmen sich eine Zeit lang gegenüberstehen, so daß die beheizbaren Saugplatten den Zuschnitt stufenweise ansaugen, erwärmen, transportieren und abblasen. Es ist zwar bei der eingangs erwähnten Preßformmaschine schon versucht worden, den Gegenbacken heizbar zu machen, erfindungsgemäß ist aber als Gegenbacken ein besonderer Aufbau vorgesehen, nämlich der beheizbare Hauptträger, an welchem im Abstand, in seiner Bewegungs- bzw. Vorschubrichtung betrachtet, hintereinander wenigstens zwei Hauptsaugplatten angeordnet sind. Wichtig ist dabei die erfindungsgemäße Überlegung, die Zeitdauer, während welcher der tiefziehfähige Kunststoff zum Aufheizen am Gegenbacken anliegt, zu verkleinern, beispielsweise zu halbieren. Nimmt man beispielsweise an, daß zum vollständigen Durchheizen des Zuschnittes 12 Sekunden benötigt werden, dann kann erfindungsgemäß durch die Schaffung zweier beheizter Saugplatten die Zeit so verringert werden, daß der Zuschnitt zwischen dem Tiefziehwerkzeug auf der einen und der in Vorschubrichtung vorderen Hauptsaugplatte auf der anderen Seite zur Wärmeerhaltung eine Zeit von beispielsweise nur sechs Sekunden ausreicht mit der Folge, daß alle sechs Sekunden eine offene Schale tiefgezogen von der Vorrichtung fertig ausgeworfen werden kann.

Das restliche Durchwärmen des Zuschnittes über eine Zeitdauer von z.B. sechs Sekunden setzt ein vergleichbar langes Vorwärmen voraus. Hierfür sind Mittel erfindungsgemäß insofern vorgesehen, als über der vorderen Hauptsaugplatte am Hauptträger in der erwähnten Weise eine mittlere Hauptsaugplatte zusätzlich beheizbar vorgesehen ist.

Außerdem ist gemäß der vorstehenden Lehre der Erfindung die Vorrichtung so aufgebaut und mit solchen Mitteln zusätzlich versehen, daß eine Aufnahme des Zuschnittes von der jeweils hinteren (z.B. hier der mittleren) Hauptsaugplatte und dann über den Außenwärmebacken eine Übergabe auf die jeweils vorderste (z.B. hier die vordere) Hauptsaugplatte vorgesehen wird.

Es steht also dem Tiefziehwerkzeug als Gegenbacken der vordere Teil des sogenannten Vorschubwärmebackens gegenüber. Der Aufbau des Vorschubwärmebackens sei als Beispiel wiederholt folgender: Ein länglicher, beheizbarer Hauptträger trägt im Abstand voneinander mindestens zwei Hauptsaugplatten und bewegt sich mittels einer Hubvorrichtung intermittierend in einer bestimmten Richtung, die beispielsweise in der Vertikalen angenommen werden kann. Gegenüber befinden sich zwei in der Höhe nicht bewegliche, aber beispielsweise in der Horizontalen bewegbare Werkzeuge, nämlich im oberen Bereich der Außenwärmebacken und im unteren Bereich das Tiefziehwerkzeug. Der Außenwärmebacken dient nicht nur der zusätzlichen Erwärmung des Zuschnittes beim Vorerwärmen sondern auch der Übergabe des Zuschnittes von der oberen Position, in welcher die Außensaugplatte arbeitet, zu einer unteren Position, in welcher das Tiefziehwerkzeug arbeitet.

Die erfindungsgemäße Vorrichtung der hier betrachteten bevorzugten Ausführungsform mit vertikaler Vorschubrichtung arbeitet nun also derart, daß ein Zuschnitt durch Vakuumeinrichtungen an der (obersten, hier beispielsweise der) mittleren Hauptsaugplatte in einer Position angesaugt wird, in welcher der Vorschubwärmebacken vom Tiefziehwerkzeug fort, in dem hier gedachten Beispiel vertikal um eine Position nach oben herausgezogen ist. Danach trägt der Vorschubwärmebacken also den Zuschnitt und beginnt, den Zuschnitt einseitig zu erwärmen und sich in die nächst tiefere Position zu bewegen. In dieser gelangt nun der Zuschnitt in den Wirkbereich des Außenwärmebacken, der unter leichtem Andruck nun gegen den Vorschubwärmebacken anfährt, so daß ein guter Wärmeübergang zwischen der Außensaugplatte und der Hauptsaugplatte besteht, welche beide beheizt sind und damit den Zuschnitt vorwärmen. Im nächsten Zustand werden die Vakuumdüsen der Hauptsaugplatte belüftet und gleichzeitig die Vakuumeinrichtungen der Außensaugplatte entlüftet, so daß der Zuschnitt am Außenwärmebacken hängenbleibt und vom Vorschubwärmebacken durch eine horizontale Bewegung entfernt werden kann.

Wenn nun der Vorschubwärmebacken wieder in seine obere Position hochfährt, kann er einen neuen vorzuwärmenden Zuschnitt aufnehmen und kann er ferner im Bereich seiner unteren Hauptsaugplatte den vorgewärmten Zuschnitt vom Außenwärmebacken aufnehmen, welcher wieder horizontal auf den Vorschubwärmebacken zufährt. Nach Belüften der Außensaugplatte und Evakuieren der Saugeinrichtungen der unteren Hauptsaugplatte befinden sich nun zwei Zuschnitte an den zwei Hauptsaugplatten des Vorschubwärmebackens, nämlich der obere Zuschnitt noch kalt und der untere Zuschnitt bereits vorgewärmt.

Derart beladen bewegt sich nun der Vorschubwärmebacken wieder vertikal in seine untere Position derart, daß der erwärmte Zuschnitt zwischen dem Tiefziehwerkzeug und der unteren Hauptsaugplatte angeordnet und durch Restwärme erwärmt gehalten wird, damit der Tiefziehvorgang durchgeführt werden kann. Das Tiefziehwerkzeug allein für sich dient nicht dem Erwärmen sondern dem Kühlen.

Die Maschinenleistung kann durch eine derart ausgestaltete Vorrichtung mit einem linear taktweise bewegbaren Vorschubwärmebacken verfielfacht werden.

Stellt man nun fest, daß die Vorwärmung noch verbessert werden kann, um den Tiefziehvorgang noch besser und in möglichst noch kürzerer Zeit durchzuführen, dann wird erfindungsgemäß weiterhin vorgesehen, daß der Vorschubwärmebacken in Richtung seiner oszillierenden Bewegung in gleichen Abständen wenigstens drei Hauptsaugplatten aufweist und der Außenwärmebacken in Bewegungsrichtung des Vorschubwärmebackens in gleichem Abstand, in welchem die Hauptsaugplatten am Hauptträger des Vorwärmebackens befestigt sind, wenigstens zwei Außensaugplatten aufweist. Der Fachmann versteht, daß der Übergabemechanismus zwischen Außenwärmebacken einerseits und Vorschubwärmebacken andererseits der gleiche bleibt, d.h. daß an jeder Hauptsaugplatte ein Zuschnitt angelegt bzw. abgegeben werden kann, je nach der Steuerung der Vakuum- und/oder Druckeinrichtungen; und daß außerdem durch die Schaffung zweier Außensaugplatten (oder gegebenenfalls noch mehr Außensaugplatten) eine gegenüber der zuerst beschriebenen doppelte Vorwärmzeit zur Verfügung steht. Mit anderen Worten wird die Zeit für das Erwärmen des Zuschnittes allmählich immer geringer, wodurch einerseits die jeweils oberste Hauptsaugplatte in schnellerem Takt kalte Zuschnitte aufnehmen und die Vorrichtung andererseits am auslaufseitigen Ende schneller tiefgezogene Schalen ausstoßen kann.

Es ist zweckmäßig, die jeweiligen Saugplatten (die man entsprechend einer anderen Steuerung auch Druckplatten nennen könnte) im wesentlichen eben auszugestalten, um einen ebenfalls im wesentlichen ebenen Zuschnitt vorzuwärmen und dem Tiefziehvorgang zuzuführen. Es ist weiterhin zweckmäßig, wenn das Tiefziehwerkzeug rahmenartig rund um die offene Seite der zu fertigenden Schale einen möglichst schmalen Klemmstreifen aufweist, welcher mit dem entsprechenden Rand des Gegenbackens zusammenwirkt mit dem Ergebnis, daß das Endprodukt, beispielsweise die fertige, einseitig offene Schale, rahmenartig außen einen nur schmalen Streifen bekommt. Infolgedessen braucht aus dem ebenen, bogenförmigen Zuschnitt (oder im Falle einer von einer Rolle abgezogenen Bahn) kein Materialgitter als Abfallprodukt von der fertigen Schale getrennt und separat für das rezyklieren bearbeitet zu werden. Vielmehr wird der gesamte Zuschnitt abfallfrei zu der einseitig offenen Schale gezogen.

Bevorzugt ist es, wenn erfindungsgemäß der Außenwärmebacken aus einem Außenträger aufgebaut ist, an welchem wenigstens zwei Außensaugplatten über Außenheizkörper befestigt sind, wobei vorzugsweise zwischen Außenträger und jeweiligem Außenheizkörper eine Wärmeisolation vorgesehen ist. Im Falle des Außenwärmebackens befindet sich der Träger außen auf einer Seite, weshalb er hier mit Außenträger bezeichnet ist. An diesem sind Wärmeisolationsplatten angebracht, welche ihrerseits den jeweiligen Außenheizkörper haltern, so daß durch diesen Aufbau der Heizkörper nicht den Außenträger aufwärmt und damit die Umgebung für das Herstellungsverfahren wirkungslos beheizen würde. Durch die Wärmeisolation wird vielmehr die von dem Außenheizkörper erzeugte Wärme vom Außenträger ferngehalten und stattdessen auf die andere Seite zu der am Außenheizkörper angebrachten Außensaugplatte geleitet. Nur diese soll sich aufheizen, weil der zu erwärmende Zuschnitt seine Wärme durch diese Außensaugplatte erhält.

Besonders zweckmäßig ist es erfindungsgemäß, wenn bei weiterer vorteilhafter Ausgestaltung die Hauptsaugplatten paarweise auf gegenüberliegenden Seiten des Hauptträgers befestigt sind, entsprechend zwei Außenwärmebacken mit Außenträger und dem Vorschubwärmebacken zugewandten Außensaugplatten angeordnet sind und auch zwei einander gegenüberliegende Tiefziehwerkzeuge vorgesehen sind. Dieser zu einer gedachten vertikalen Ebene, welche zentral durch den beheizbaren Hauptträger gelegt zu denken ist, symmetrische Aufbau erklärt auch besser die vorstehend gewählten Bezeichnungen der "Außenwärmebacken", die nämlich außen, d.h. auf jeder Seite der Symmetrieebene bezüglich des mittig angeordneten Vorschubwärmebackens angeordnet sind.

Diese paarweise Ausgestaltung des Vorschubwärmebackens in der Mitte einerseits und der Außenwärmebacken und Tiefziehwerkzeuge jeweils außen andererseits erlaubt die Verdoppelung der Maschinenleistung, weil mit den gleichen Bewegungen und damit in der gleichen Zeit die doppelte Anzahl einseitig offener Schalen gefertigt werden kann. Durch diesen symmetrischen Aufbau ergibt sich aber unter einer besonderen Bedingung noch ein weiterer Vorteil, nämlich die Möglichkeit der Herstellung einer allseitig schließbaren Packung aus zwei Schalen. Diese Bedingung besteht darin, daß der Hauptkörper des Zuschnittes mit Hilfe des Tiefziehwerkzeuges vom mittleren Vorschubwärmebacken nach außen derart tiefgezogen bzw. ausgeformt wird, daß die eine offene Fläche der jeweiligen Schale nämlich dem Vorschubwärmebacken bzw. seiner unteren Hauptsaugplatte zugewandt ist. Auf diese Weise liegen nach dem Tiefziehen zwei Schalen einander derart gegenüber, daß beim weiteren horizontalen Bewegen und Zusammenführen der beiden Tiefziehwerkzeuge des beschriebenen Paares die Ränder der jeweils offenen Schale aufeinandergedrückt und miteinander verklebt bzw. versiegelt werden können und dadurch ein Behälter geformt wird.

Bei der Vorrichtung gemäß der Erfindung ist das Tiefziehwerkzeug also translatorisch intermittierend von einer äußeren Rückzugsposition in eine mittlere Tiefziehposition und weiter zu einer Randversiegelungsposition und dann wieder zurück bewegbar. In der ersten Rückzugsposition ist der Abstand zwischen dem Tiefziehwerkzeug und dem Vorschubwärmebacken so groß, daß sich der Vorschubwärmebacken vom Tiefziehwerkzeug fortbewegen bzw. sich entfernen oder wieder heranbewegen kann.

In der zweiten Position, d.h. der mittleren Tiefziehposition, schließt der randförmige Klemmbereich des Tiefziehwerkzeuges dichtend an die untere Hauptsaugplatte des Vorschubwärmebackens, so daß Vakuum an den Tiefziehwerkzeugen angelegt und der dazwischen eingeklemmte Zuschnitt in den Formhohlraum des Tiefziehwerkzeuges zurückgesaugt werden kann. Der Abstand zwischen dem Tiefziehwerkzeug einerseits und dem Vorschubwärmebacken andererseits ist in dieser Position daher Null.

Zur Formung einer Packung aus zwei offenen Schalen muß selbstverständlich nach dem Tiefziehvorgang das Tiefziehwerkzeug wieder ein Stück weit zurückgezogen, d.h. vom Vorschubwärmebacken entfernt werden, damit sich dieser aus seiner Tiefziehposition (auch der Vorschubwärmebacken hat natürlich eine Tiefziehposition, nämlich seine unterste Position) - z.B. nach oben - wegbewegen kann. Durch diese zuletzt genannte Bewegung des Vorschubwärmebackens ist der Raum zwischen den paarweise einander gegenüberliegenden Tiefziehwerkzeuge nunmehr frei, und die Tiefziehwerkzeuge können dann in ihre dritte Siegelposition bewegt werden, wo beide Backen mit Druck gegeneinanderfahren und den rahmenartigen Rand der jeweiligen Schale auf den der jeweiligen gegenüberliegenden Schale unter Ausnutzung der Restwärme anpressen. Auf diese Weise werden die beiden Schalen längs ihrer Ränder miteinander verklebt, versiegelt und untrennbar verbunden. Die Packung ist fertig und kann nach Zurückbewegen der Tiefziehwerkzeuge entformt werden.

Es kann aber erwünscht sein, eine besondere Öffnung mit besonderen Verschließeinrichtungen an einer solchen Packung vorzusehen, wozu erfindungsgemäß ebenfalls Maßnahmen vorgesehen sind. Hierbei wird nämlich vorgeschlagen, daß erfindungsgemäß an einem Rand der unteren Hauptsaugplatte ein Vorsprung zur Auswölbung des Zuschnittes und am entsprechenden Rand der unteren Außensaugplatte eine kongruente Ausnehmung angeordnet sind. Die einfachste Herstellung und Anordnung einer Öffnung für die spätere Packung ist die symmetrische Anordnung einer Öffnung, d.h. die Anordnung einer halben Öffnung am Rand der jeweils offenen Schale derart, daß beim Zusammensetzen beider Schalen beide Halböffnungen sich zu einer gesamten Öffnung ergänzen. Am einfachsten wird ein solcher Vorgang bei der erfindungsgemäßen Vorrichtung dadurch erreicht, daß der jeweilige Zuschnitt an einem Rand gezwungen wird, sich über eine Auswölbung zu legen. Zu diesem Zweck ist entsprechend der vorerwähnten Lehre erfindungsgemäß an der jeweils innen oder mittig angeordneten Hauptsaugplatte ein Vorsprung angeordnet, welcher in einen entsprechenden Raum, d.h. eine entsprechende Ausnehmung einerseits der Außensaugplatte und andererseits auch des Tiefziehwerkzeuges hineinfährt. Ohne den Zuschnitt besteht auch beim Zusammenfahren der Außensaugplatten und des Vorschubwärmebackens in der einen Position sowie beim Zusammenfahren der Tiefziehwerkzeuge in der anderen Position ein Abstand zwischen den jeweils äußeren Oberflächen des Vorsprunges jeweils auf der Innenseite und der jeweiligen Ausnehmung auf der Außenseite. Dieser Abstand liegt aber im Bereich zwischen 1/10 und wenigen Millimeter, vorzugsweise 1 bis 3 mm, so daß er vollständig vom Zuschnitt bzw. der Dicke des für den Zuschnitt vorgesehenen Materials aus Kunststoff eingenommen wird. Auf diese Weise ist beim Zusammenfahren der Klemmteile sogar eine gasdichte Klemmung gewährleistet.

Der oben beschriebene Vorsprung an der Hauptsaugplatte und die Ausnehmung auf der Außensaugplatte dienen bereits der Vorformung der Öffnung insofern, als der bereits vorgewärmte Randbereich des Zuschnittes in der Position vor dem Tiefziehen durch Herumlegen des Zuschnittrandes um den Vorsprung geformt wird.

Besonders zweckmäßig ist es bei einer vorteilhaften Ausgestaltung der Erfindung, wenn dementsprechend die Aussparung des Tiefziehwerkzeuges im Querschnitt seiner Bewegungsebene etwa dreieckförmig ist und der Vorsprung der Hauptsaugplatte in derselben Querschnittsebene halbkreisförmig ist, wobei der Vorsprung bzw. die diesen aufnehmende Ausnehmung vorzugsweise kegelförmig derart ist, daß der Kegel sich zum Rand der betreffenden Platte hin öffnet.

Betrachtet man in der Position vor der Tiefziehposition die Außensaugplatte mit ihrer Ausnehmung auf der einen und die Hauptsaugplatte mit ihrem Vorsprung auf der anderen Seite, legt man durch beide einen Schnitt in Bewegungsrichtung des Außenwärmebackens, die ja parallel zu der des Tiefziehwerkzeuges ist, dann sollte sich für jeden Vorsprung bzw. Ausnehmung eine halbkreisförmige Schnittlinie ergeben. Ein solcher Vorsprung könnte noch halbzylinderförmig sein. Zusätzlich ist aber angegeben, daß er vorzugsweise halbkegelförmig ist. Betrachtet man nun bezüglich des Betriebes die nächstfolgende, nämlich die Tiefziehposition, und danach die Siegelposition, bei welcher zwischen den beiden Tiefziehwerkzeugen der Vorschubwärmebacken herausgezogen ist, dann ist zwar der körperliche Vorsprung an der Hauptsaugplatte entfernt, das Material des Zuschnittes in diesem Bereich, welches aber um diesen Vorsprung herumgeformt worden war, hat nun die beschriebene Gestalt eines Kegels mit sich zum äußeren Rand hin erweiternder Öffnung.

Die weitere Angaben der vorstehenden Ausgestaltung der Erfindung, wonach die Aussparung des Tiefziehwerkzeuges einen dreieckförmigen Querschnitt hat, bedeutet für das fertige Produkt, daß die jeweilige Schale im Querschnitt etwa V-förmig und im Längsschnitt beispielsweise rechteckförmig ist. Wollte man diese Schale mit der Öffnung nach oben auf eine Ebene legen, so würde diese Schale auf der Kante des "V" zu liegen kommen. Führt man andererseits beide einseitig offenen Schalen in der Siegelposition mit den sich aufeinanderzubewegenden Tiefziehwerkzeugen Rand an Rand aneinander, dann bedeutet diese Ausgestaltung des Tiefziehwerkzeuges letztlich, daß das fertige Produkt, die mit der vorstehend beschriebenen Öffnung versehene Packung, einen rahmenförmig die Packung umziehenden Steg, nämlich die beiden versiegelten Ränder, hat, welcher sich in Draufsicht auf die im Querschnitt dann etwa viereckige Packung längs einer Diagonalen erstreckt. Die Trennebene der gesamten Packung liegt also in den Ebenen der rahmenartigen Klemmränder der jeweils einseitig offenen Schale, wobei sich diese Symmetrieebene durch die Diagonale von Deckel und Boden erstreckt.

Mit dem Ausformen des Tiefziehwerkzeuges in der oben beschriebenen Gestalt hat jede einseitig offene Schale zwei V-förmig zueinanderstehende Seitenwände (wie die zwei Flächen eines Schrägdaches) und zwei etwa dreieckförmige Endwände (wie die Giebel des Daches), die beim Zusammenfügen zweier Schalen zur Packung in Draufsicht viereckig sind. Die eine viereckige Endfläche bildet dann den Boden, die andere Endfläche den Deckel der Packung.

Die Vorsprünge bzw. Ausnehmungen an der unteren Hauptsaugplatte bzw. in der Außensaugplatte befinden sich vorzugsweise im Bereich der genannten Endflächen, so daß letztlich die eine halbkreisförmige Öffnung in der einen Endwand der offenen Schale liegt mit dem Ergebnis, daß beim Zusammenschweißen der beiden Schalen die kreisförmige Öffnung in einer Endwand angeordnet ist, die später den Deckel bildet.

Vorteilhaft ist es gemäß der Erfindung weiterhin, wenn an der Unterseite des Hauptträgers ein Öffnungsformstück, vorzugsweise mit einem Zapfen, welcher in den Innenraum des Tiefziehwerkzeuges reicht, angebracht ist. Der Vorsprung mit der Ausnehmung in der Wärmeposition vor der Tiefziehposition besorgt also im wesentlichen die Vorformung der späteren Öffnung, und die Endformung ist besonders dann gut durchzuführen, wenn das Öffnungsformstück am Hauptträger befestigt ist und in der Tiefziehposition in den Innenraum der dann aufeinanderzubewegten Tiefziehwerkzeuge reicht. Einerseits wird durch das, vorzugsweise den Zapfen aufweisende Öffnungsformstück eine gasdichte Abdichtung geschaffen, und andererseits kann das Öffnungsformstück eine formgenaue Gestaltung für den Randbereich mit der vorgesehenen Teilöffnung vorgeben. Auf diese Weise kann eine exakte Öffnungsvorrichtung an einer Packung geschaffen werden.

Erfindungsgemäß ist es auch zweckmäßig, wenn weiterhin der Vorschubwärmebacken und der Außenwärmebacken im wesentlichen die Gestalt einer rechteckigen Platte haben, daß mehrere Tiefziehwerkzeuge, sich über die Länge der rechteckigen Platte erstreckend, aneinander befestigt sind und entsprechend deren Anzahl eine Vielzahl von Vorsprüngen bzw. Ausnehmungen in den Saugplatten vorgesehen sind. Es versteht sich, daß auch an den jeweiligen Unterseiten des einzigen Hauptträgers eine entsprechende Vielzahl von Öffnungsformstücken angebracht ist. Auf diese Weise kann man nämlich aus einem entsprechend großen, ebenen Zuschnitt gleichzeitig eine Vielzahl von einseitig offenen Schalen formen, die jeweils nur durch schmale Stege miteinander verbunden sind. Selbst wenn man das vorstehend beschriebene Verfahren mit der erfindungsgemäßen Vorrichtung durchführt und die Vielzahl der Halbschalen auf der einen Seite des Vorschubwärmebackens mit der Vielzahl von fertig tiefgezogenen Halbschalen auf der anderen Seite dieses Backens miteinander vereinigt und versiegelt, ergibt sich gleichzeitig eine Vielzahl von beispielsweise vier, sechs, zehn oder mehr Packungen mit den beschriebenen Öffnungen, die zunächst alle noch aneinanderhaften und entsprechend günstig z.B. gefüllt und verschlossen werden können. Danach kann eine Vereinzelung dadurch erfolgen, daß eine Packung von der anderen bzw. ein Schalenpaar vom anderen Schalenpaar durch Schneiden längs der die Vielzahl von Packungen/Schalen verbindenden Stege getrennt werden kann, vorzugsweise durch thermische Trennung.

Wenn also 12 Sekunden benötigt werden, um einen Kunststoffzuschnitt vollständig in seinem gesamten Volumen für das Tiefziehen zu erhitzen, dann steht bei einer Vorrichtung mit einer Tiefziehposition, einer Mittelposition und einer oberen Position in jeder derselben eine Zeit von vier Sekunden, einschließlich der Bewegung der einzelnen Backen, zur Verfügung, um aus dem kalten Zuschnitt eine fertige Halbschale zu formen, gegebenenfalls sogar eine Packung zu formen. Dadurch erhöht sich die Leistung merklich, und es kann eine Schale bzw. es können Packungen ohne Abfall hergestellt werden.

Weitere Vorteile, Merkmale und Anwendungsmöglichkeiten der vorliegenden Erfindung ergeben sich aus der folgenden Beschreibung im Zusammenhang mit den anliegenden Zeichnungen. Es zeigen:
- Figur 1: schematisiert die Vorderansicht einer Vorrichtung zum Herstellen zweier Schalen und Verbinden derselben zu Packungen, wenn man in Richtung der Symmetrieebene und entgegen der Abförderrichtung der fertigen Reihe von Packungen blickt,
- Figur 2: eine Ansicht der Maschine der Figur 1 von oben, wobei die Hauptsymmetrieebene wieder in der Mitte des Zeichnungsblattes vertikal von oben nach unten zu sehen ist,
- Figur 3: schematisiert herausgegriffen die Hauptverarbeitungsteile der Vorrichtung mit Vorschub-, Außen- und Tiefziehwerkzeug in einer ersten Betriebsstellung,
- Figuren 4 bis 8: die gleichen Teile der Vorrichtung wie bei Figur 3 in jeweils anderen und aufeinanderfolgenden Betriebsstellungen, wobei in den Figuren 3 bis 8 jeweils nur die in Blickrichtung der Figur 1 links von der als vertikale Linie dargestellten Symmetrieebene liegenden Backen veranschaulicht sind,
- Figuren 9a und 9b: eine weitere Betriebsposition (nach der der Figur 8), wobei alle Backen paarweise auf beiden Seiten der Symmetrieebene schematisch angeordnet gezeigt sind,
- Figur 10: eine Draufsicht auf die untere Hauptsaugplatte entsprechend der Linie X-X der Figur 4,
- Figur 11: eine Seitenansicht der unteren Hauptsaugplatte, wenn man in Figur 10 von links nach rechts blickt,
- Figur 12: eine ähnliche Ansicht auf die untere Hauptsaugplatte, jedoch nach dem Tiefziehvorgang entsprechend der Linie XII-XII der Figur 5 und
- Figur 13: die Ansicht auf die untere Hauptsaugplatte nach dem Entfernen des darüberliegenden Tiefziehwerkzeuges, wenn man in Figur 12 von links nach rechts blickt.

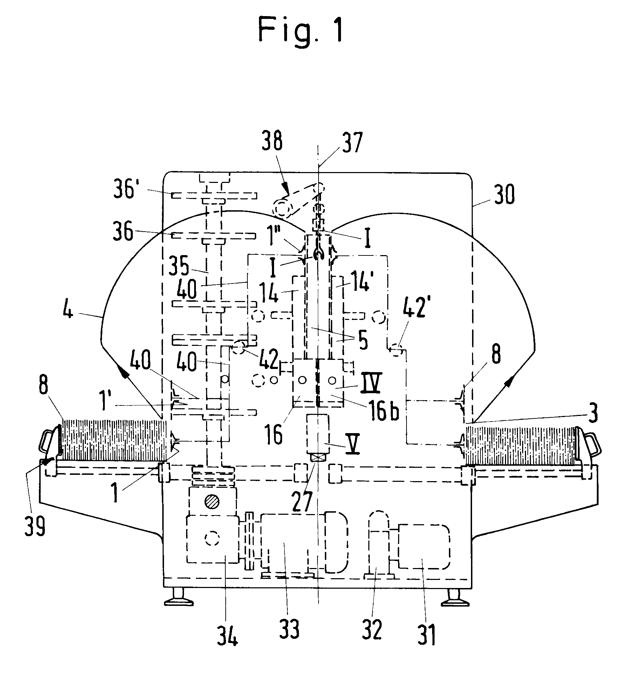

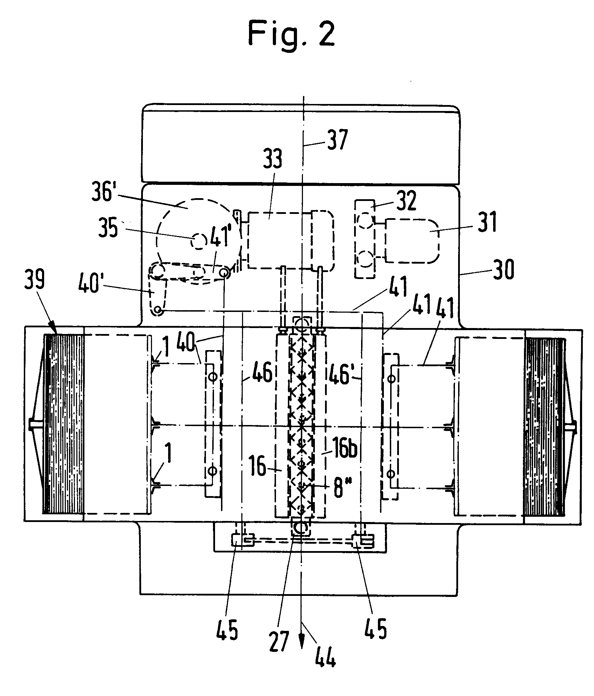

In den Figuren 1 und 2 ist die Tiefziehvorrichtung nur mit ihren wesentlichen Teilen innerhalb eines allgemein mit 30 bezeichneten Gehäuses dargestellt. Bis auf das Vakuumgebläse 31 mit dem Ausblasgehäuse 32, dem daneben im unteren Bereich der Maschine angeordneten elektrischen Antriebsmotor 33 mit nachgeschaltetem Umlenkgetriebe 34 und der vertikalen Kurvenwelle 35 mit den verschiedenen Steuerkurven 36, 36' und schließlich der Hubvorrichtung 38 ist die Vorrichtung im wesentlichen symmetrisch bezüglich der allgemeinen Symmetrieebene 37 aufgebaut. Diese Symmetrieebene ist in Figur 1 durch die vertikale Linie mit der Bezugszahl 37 bezeichnet. Diese Symmetrieebene 37 findet sich auch in den Figuren 2 bis 9 wieder. Zur Erläuterung der hier gezeigten Vorrichtung genügt es daher, die Maschinenteile einer Hälfte, d.h. auf z.B. der linken Seite der linienförmig dargestellten Symmetrieebene 37 zu beschreiben.

In Form ebener, rechteckförmiger Platten aus tiefziehfähigem Kunststoff ist ein ganzer Stapel von Zuschnitten 8 in einem Magazin 39 angeordnet. Nicht dargestellt sind Traghebel mit Saugern 1, deren Bewegung über die strichpunktierte Linie 40 auf der linken Seite der Symmetrieebene 37 und die strichpunktierte Linie 41 auf der rechten Seite der Symmetrieebene 37 über die mechanisch/pneumatischen Arme 40', 41' von der betreffenden Steuerkurve 36' abgeleitet ist. Im wesentlichen um den Punkt 42, 42' rotatorisch aber zusätzlich auch translatorisch bewegbar verschieben sich die Sauger 1 aus der in Figur 1 dargestellten unteren Position nach Ansaugen eines Zuschnittes 8 in ihre obere Position 1', in der man beispielsweise die Unterkante von der Seite in Figur 1 gesehen mit 3 bezeichnet. Aus dieser Zwischenstellung 1' werden die Sauger zusammen mit dem von diesen festgehaltenen Zuschnitt 8 so in die obere Position I bewegt, daß die untere Kante 3 des Zuschnittes 8 die in Figur 1 mit 4 bezeichnete Kurve durchfährt. In der Position I stehen die Sauger 1'' der sogenannten oberen Hauptsaugplatte 7 des insgesamt mit 5 bezeichneten Vorschubwärmebackens 5 gegenüber. In dieser Position I wird auf jeder Seite der Symmetrieebene 37 der betreffende Zuschnitt 8 durch Belüften der Sauger 1'' und Evakuieren der nicht dargestellten Vakuumeinrichtungen an der oberen Hauptsaugplatte 7 von letzterer angesaugt bzw. an letztere angelegt. Danach bewegen sich die Sauger 1'' wieder zurück in die Position des Saugers 1, um beispielsweise nach vier Sekunden den nächsten Zuschnitt 8 anzusaugen und in der vorstehend beschriebenen Weise wieder an die obere Hauptsaugplatte 7 zu übergeben.

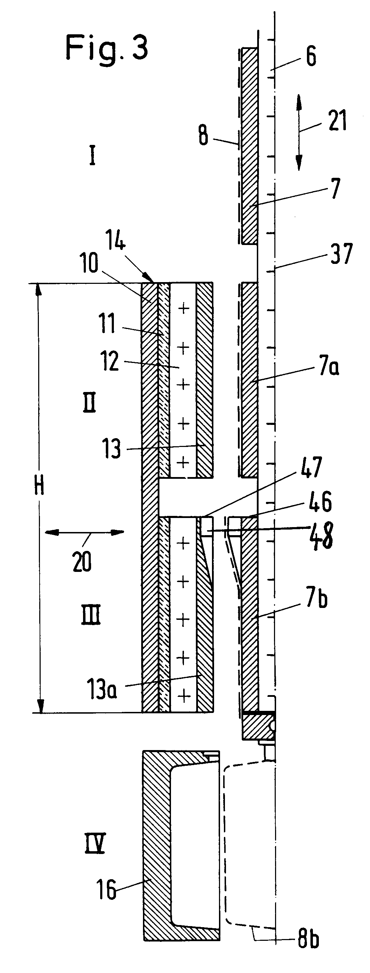

Während dieser Übergabe des Zuschnittes 8 bewegt sich die vertikale Kurvenwelle 35 und steuert über ihre Steuerkurven 36 usw. andere Bewegungen, wie in Verbindung mit den Figuren 3 bis 9 beschrieben wird. Unter dem Paar von Vorschubwärmebacken 5 befindet sich das Paar von Tiefziehwerkzeugen 16 (auf der hier beschriebenen linken Seite der Symmetrieebene 37) und 16b auf der gegenüberliegenden rechten Seite. Die Höhe dieser Tiefziehwerkzeuge 16, 16b ist gleichzeitig auch die Position IV. Aus Figur 1 erkennt man, daß die Bewegung der in Verarbeitung befindlichen Zuschnitte 8 vertikal längs der Symmetrieebene 37 von oben nach unten, d.h. von der Hubvorrichtung 38 zu den Tiefziehwerkzeugen 16, 16b hin und weiter nach unten in die Position V bis auf das Transportband 27 erfolgt.

In Figur 2 sind die Hubvorrichtung 38 und die Vorschubwärmebacken 5 weggelassen, so daß man die auseinandergezogenen Tiefziehwerkzeuge 16, 16b und die dazwischen angeordnete Reihe von acht fertigen Packungen 8'' erkennt, die sich auf dem Transportband 27 befinden und in Richtung der die Symmetrieebene 37 veranschaulichenden Linie gemäß Pfeil 44 abgefördert werden.

Mit weiteren Nockenfolgerarmen entsprechend den Hebeln 40' wird ein Bewegungshebelpaar 45 längs der schematischen Steuerlinie 46, 46' angesteuert und bewegt, um die nun anhand der Figuren 3 bis 9 gezeigten Bewegungen der einzelnen Vorrichtungsteile durchzuführen.

Aus dem Zuschnitt 8 soll eine einseitig offene Schale 8b über verschiedene Zwischenstufen geformt werden, wobei auf jeder Seite der Symmetrieebene 37 ein Tiefziehwerkzeug 16 bzw. 16b in Richtung des Doppelpfeiles 20 auf einen Gegenbacken zu- und von diesem fortbewegbar ist, welcher der hier beschriebene Vorschubwärmebacken 5 ist.

Dieser Vorschubwärmebacken 5 ist in jeder Hälfte so aufgebaut, daß er in der Mitte einen beheizbaren Hauptträger 6 und drei in jeweils gleichem Abstand (a) voneinander angeordnete Hauptsaugplatten haltert. Hier gibt es speziell eine obere Hauptsaugplatte 7, eine mittlere Hauptsaugplatte 7a und ein untere Hauptsaugplatte 7b. Der Hauptträger 6 erstreckt sich über alle drei Saugplatten 7, 7a, 7b einstückig.

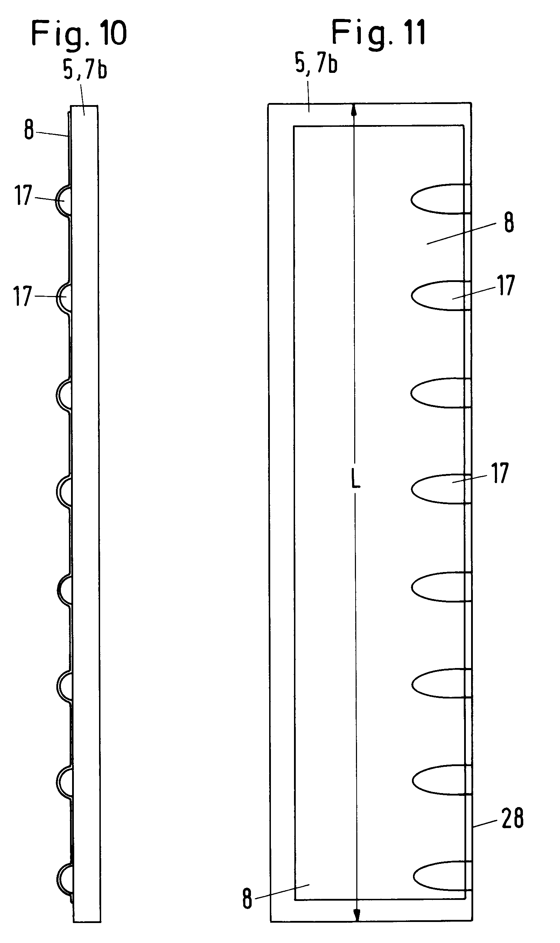

Die gesamte Länge L des Vorschubwärmebackens 5, die in Figur 11 deutlich veranschaulicht ist, beträgt etwa 1 m. Diese Länge L erstreckt sich in Richtung des Transportbandes 27, d.h. also senkrecht zur Papierebene der Figur 1 und liegt auch jeweils senkrecht zur Papierebene der Figuren 3 bis 9; hingegen in der Papierebene der Figur 2 in Richtung des Bewegungspfeiles 44. Deshalb ist auch die Länge L des Tiefziehwerkzeuges 16, 16b auch etwa 1 m. Hinsichtlich der Länge gilt das gleiche auch für die Außenwärmebacken, die allgemein mit 14 bezeichnet und in den Figuren 1 und 3 bis 9 zu sehen sind.

Der Vorschubwärmebacken 5 ist in Richtung des Doppelpfeiles 21 senkrecht zur Bewegungsrichtung gemäß Doppelpfeil 20 bewegbar. In Richtung des Doppelpfeiles 20 sind der Tiefziehwerkzeuge 16 (und entsprechend sein gegenüberliegender Backen 16b) und der Außenwärmebacken 14 bewegbar. Die Bewegungsrichtung ist dieselbe, die Bewegungsbahn des Außenwärmebackens 14 liegt parallel zu dem des Tiefziehwerkzeuges 16.

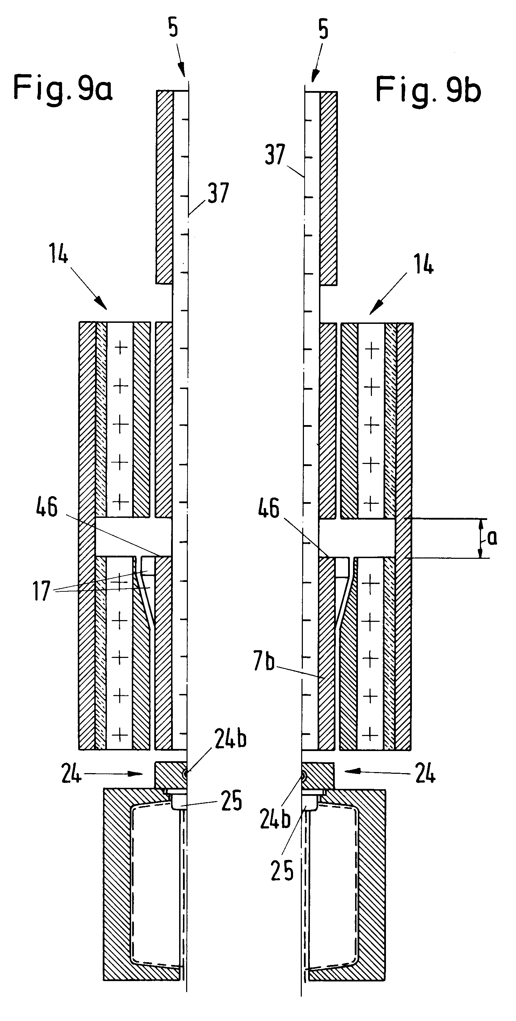

Zum Aufbau des Vorschubwärmebackens 5 ist außerdem zu erwähnen, daß an seinem unteren, dem Tiefziehwerkzeug 16 zugewandten Ende ein Öffnungsformstück 24 angebracht ist, bestehend aus einer sich über die Länge L des Vorschubwärmebackens 5 erstreckenden Schiene 24a mit Belüftungsöffnungen 24b und einer entsprechenden Vielzahl von Zapfen 25, für die Maschine der Figur 2 mit den acht hintereinander angeordneten Backenpaaren also auch acht Zapfen 25 an der einzigen durchgehenden Schiene 24a. Einstückig oder separat angeordnet sind über die Länge L des Vorschubwärmebackens 5 bzw. des Hauptträgers 6 die einzelnen Hauptsaugplatten 7, 7a, 7b angeordnet, und die unteren Hauptsaugplatten 7b weisen jeweils an ihrem oberen Rand 46 teilkegelförmige Vorsprünge 17 auf. Man sieht aus Figur 9, daß sowohl auf der linken Seite der Symmetrieebene 37 (Figur 9a) als auch auf der rechten Seite (Figur 9b) jeweils eine untere Hauptsaugplatte 7b und damit auch an ihrem oberen Rand 46 ein Vorsprung 17 angeformt oder angebracht ist. Da jede Schale bzw. jede Packung 8'' nur eine Vertiefung im Rand bzw. Öffnung braucht, sind ebenso viele Vorsprünge 17 wie Zapfen 25, und auch in gleicher Lage über die Länge L des Vorschubwärmebackens 5 verteilt, angeordnet. Bei dem Beispiel der in Figur 2 gezeigten Maschine mit gleichzeitig acht herstellbaren Packungen 8'' sind also an den paarweise angeordneten unteren Hauptsaugplatten 7b jeweils acht Vorsprünge 17 angebracht.

Der Aufbau des Außenwärmebackens 14 ist symmetrisch, wie in den Figuren 9a und 9b gezeigt, so daß die Beschreibung der linken Seite gemäß Figur 3 genügt. Auf der dem Vorschubwärmebacken 5 abgewandten Seite weist der Außenwärmebacken 14 einen über seine ganze Höhe sich erstreckenden Außenträger 10 auf, an welchem auf der dem Vorschubwärmebacken 5 zugewandten Seite eine Wärmeisolation 11 und an dieser wiederum dem Backen 5 zugewandt, ein Außenheizkörper 12 und wiederum auf dessen, dem Wärmebacken 5 zugewandten Seite eine Außensaugplatte 13 angebracht sind.

Auch der Außenwärmebacken 14 weist über seine Höhe H (Figur 3) im Abstand angeordnet zwei Gruppen von Außensaugplatten 13 auf, welche über die Länge L, die auch für den Außenwärmebacken 14 gleich groß ist wie die für den Vorschubwärmebacken 5, in jeder Höhe eine durchgehende oder getrennte Außensaugplatten 13 sind. Die Anordnung der Außensaugplatten 13 einerseits und der Hauptsaugplatten 7, 7a, 7b andererseits ist im wesentlichen so gestaltet, daß in den jeweiligen Betriebspositionen II, III Außensaugplatte und Hauptsaugplatte einander im wesentlichen höhengleich und längengleich gegenüberstehen, so daß sie mit Druck aufeinandergepreßt werden können und ein guter Wärmeübergang zu dem dazwischen eingeklemmten Zuschnitt 8 erreichbar ist.

Betrachtet man die Bewegungsrichtung 21 des Vorschubwärmebackens 5 als vertikal und die Bewegungsrichtung 20 der Außenwärmebacken 14 einerseits und der Tiefziehwerkzeuge 16, 16b andererseits als horizontal, dann liegt im Abstand (a) von der oberen Außensaugplatte 13 des Außenwärmebackens 14 eine untere Außensaugplatte 13a. Wenn hier bei der Betrachtung der Figuren 3 bis 9 von "einer" Außensaugplatte 13 bzw. 13a die Rede ist, dann wird hier jeweils nur eine der acht gemäß Figur 2 sichtbaren, hintereinanderangeordneten Arbeitsstationen betrachtet. Der Fachmann versteht aus der vorstehenden Beschreibung schon, daß jeder Außenwärmebacken 14 einstückig oder getrennt jeweils acht obere und acht untere Außensaugplatten 13 bzw. 13a aufweist.

Die untere Außensaugplatte 13a weist zur Aufnahme des Vorsprunges 17 an der Hauptsaugplatte 7b am entsprechenden oberen Rand 47 eine kongruente Ausnehmung 48 auf, die ebenfalls wie der Vorsprung 17 im oberen Bereich zylinderförmig und im unteren Bereich kegelförmig ist.

Das Tiefziehwerkzeug 16 ist in den Figuren 3 bis 9 in einem Schnitt durch die Öffnungsvorrichtung 50 mit einer Schnittebene dargestellt, in welcher auch die Bewegungsrichtung des Tiefziehwerkzeuges 16 gemäß Doppelpfeil 20 erfolgt; d.h. senkrecht zur Symmetrieebene 37, wobei aber in der Darstellung der Figuren 3 bis 9 die Symmetrieebene 37 senkrecht zur Papierebene und die Schnittebene durch das Tiefziehwerkzeug 16 in der Papierebene liegt.

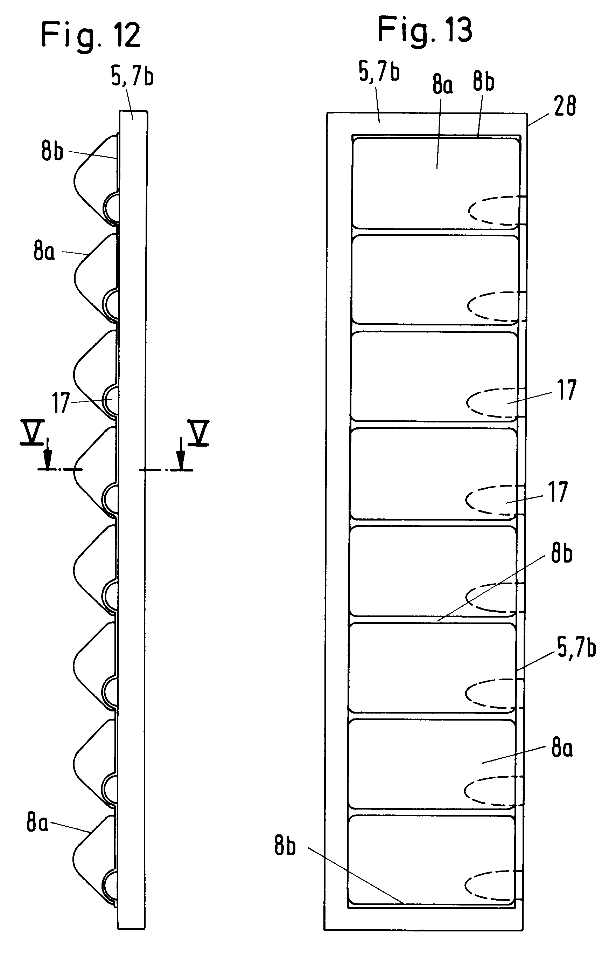

In dieser Schnittdarstellung ist die innere Aussparung des Tiefziehwerkzeuges 16 etwa rechteckig und geht durch die Öffnung 50 hindurch. Legt man eine Querschnittsansicht senkrecht dazu, also parallel zu einer Ebene entsprechend der Papierebene der Figur 2 (parallel zu Deckel und Boden der späteren Packung), dann ist diese Aussparung 49, welche dann wiederum in der Bewegungsebene 20 des Tiefziehwerkzeuges 16 liegt, etwa dreieckförmig mit vorzugsweise abgerundeten Ecken. Eine in diese Aussparung 49 hinein tiefgezogene Schale 8a hätte dann also die in Figur 12 gezeigte Form (in welcher wieder die Reihe der acht Schalen 8a gezeigt ist). Man erkennt eine gleichschenkliges Dreieck, dessen Hypothenuse an dem Vorschubwärmebacken 5 bzw. der Hauptsaugplatte 7b liegt und den Vorsprung 17 dieser unteren Hauptsaugplatte 7b umzieht.

Der Betrieb dieser Vorrichtung ist folgender:
Es war eingangs beschrieben worden, wie der Zuschnitt mit den Saugern 1 in die Position der Sauger 1' hochgehoben und dann gemäß Bewegungsweg 4 der unteren Kante 3 des Zuschnittes 8 nach oben in die Position I mit den Saugern 1'' bewegt worden ist.

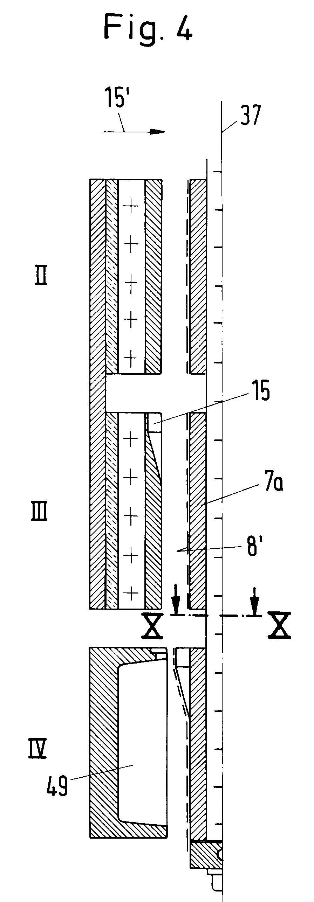

Diese Position I ist auch in Figur 3 gezeigt. Dort ist strichpunktiert der Zuschnitt 8 an der oberen Hauptsaugplatte 7 angesaugt dargestellt. Der ganze Vorschubwärmebacken 5 befindet sich in der gemäß Doppelpfeil 21 nach oben geschobenen Position. (Der Vorschubwärmebacken 5 kann immer nur um eine Position in die gezeigte obere oder in die in den Figuren 4 bis 6 gezeigte untere Position verschoben werden.)

Im Abstand a von der Position I sind darunter die Position II, im weiteren Abstand a darunter die Position III und unterhalb derselben im weiteren Abstand a die Position IV gezeigt.

In der Position IV bewegt sich also das Tiefziehwerkzeug 16 gemäß Pfeil 20 translatorisch hin und her, und darüber ebenso in der Höhe unverschieblich kann der Außenwärmebacken 14 in Richtung des Doppelpfeiles 20 hin- und herbewegt werden. Der Vorschubwärmebacken 5 kann hingegen nur gemäß Pfeil 21 nach oben oder unten bewegt werden.

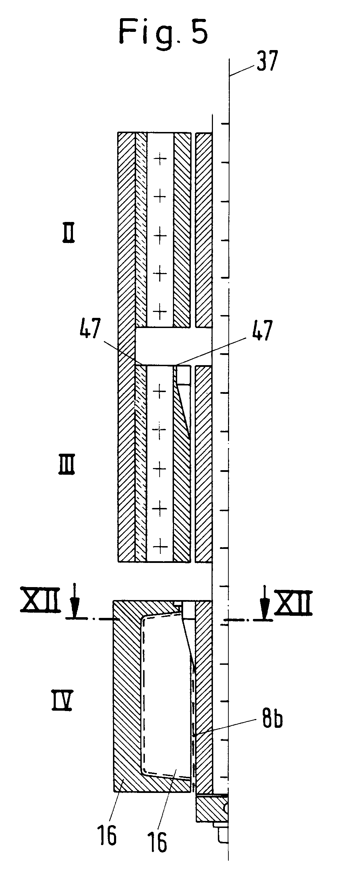

Als nächstes wird der Vorschubwärmebacken 5 gemäß nach unten gerichtetem Pfeil 21 in seine untere Position gemäß Figur 4 gefahren und mit ihm der Zuschnitt 8. Dieser befindet sich jetzt in der Position II, Figur 4. Da der Hauptträger 6 beheizt ist, beginnt sich der Zuschnitt 8 bereits zu erwärmen. In der Position II sind nun außen die Wärmebacken 14 bzw. die dem Zuschnitt 8 direkt gegenüberliegende Außensaugplatte 13 angeordnet. Diese Außenwärmebacke 14 bewegt sich nun gemäß Pfeil 15' (das ist die reche Hälfte des Bewegungspfeiles 20) in Schließposition, so daß der Zuschnitt die Position II in Figur 5 erreicht hat. Der Außenwärmebacken 14 übt einen kleinen Druck aus, um einen guten Wärmeübergang vom Außenheizkörper 12 auf die Außensaugplatte 13 und damit auch auf den Zuschnitt 8 auszuüben. In der Position II, Figur 5 gelangt also Wärme einerseits vom Außenwärmebacken 14 und andererseits vom Vorschubwärmebacken mit Saugplatte 7 direkt an den Zuschnitt. In den einzelnen Positionen, also auch in der Position II, stehen sich mit diesem Andruck die Platten vier Sekunden gegenüber.

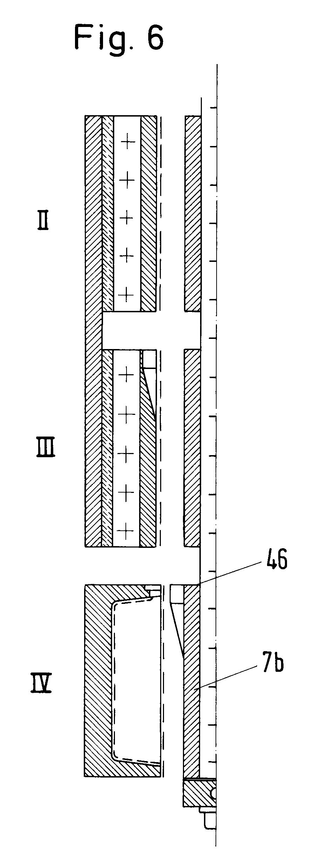

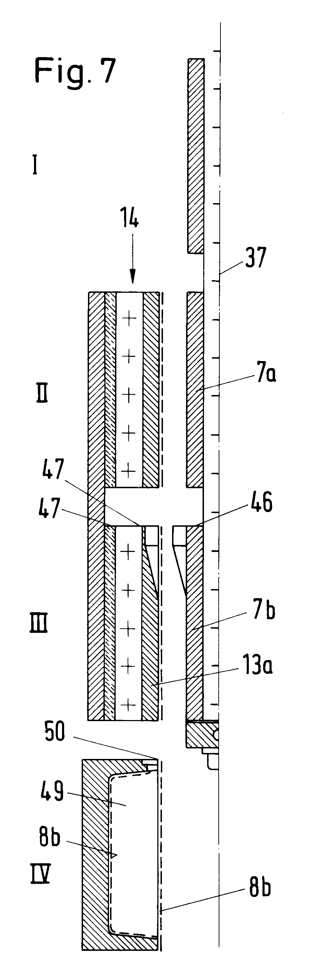

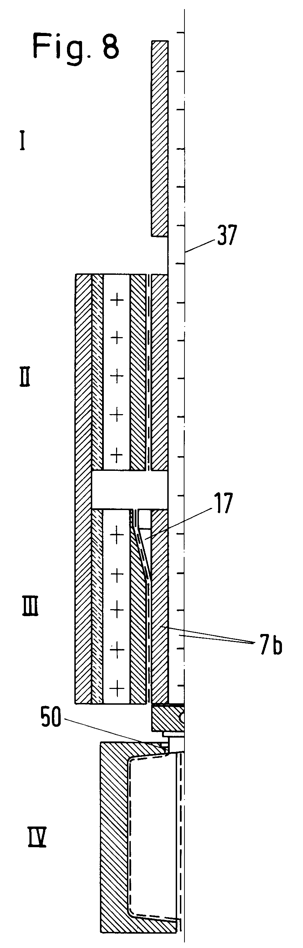

Nun erfolgt der Übergang des Zuschnittes 8 in die Position II, Figur 6 dadurch, daß die nicht dargestellten Vakuumdüsen der oberen Hauptsaugplatte 7 belüftet werden, während an die ebenfalls nicht dargestellten Saugeinrichtungen in der Außensaugplatte 13 Vakuum angelegt wird. Dadurch bleibt der Zuschnitt 8 am Außenwärmebacken 14 hängen (Stellung der Figur 6). Jetzt fährt der Vorschubwärmebacken 5 in die Position I, Figur 7, d.h. um eine Position wieder nach oben in Richtung Pfeil 21. Er übernimmt oben einen neuen Zuschnitt 8, und unten, wo in Figur 7 die mittlere Hauptsaugplatte 7a leer ist, wird nun der vorgewärmte Zuschnitt 8 von der gegenüberliegenden Außensaugplatte 13 (in der oben beschriebenen Weise durch Be- und Entlüften der Vakuumeinrichtungen) aufgenommen. Abgesehen von dem oben neu aufgenommenen Zuschnitt an der oberen Hauptsaugplatte 7, der nicht weiter dargestellt ist, wird nach weiterem Zusammenfahren der Außen- und Vorschubwärmebacken gemäß Pfeil 15' die Position II in Figur 8 erreicht.

Nun fährt der Vorschubwärmebacken 5 um eine Position wieder gemäß Pfeil 21 nach unten, so daß ein Zustand erreicht ist, wie in Position III, Figur 4. Der Zuschnitt liegt nun noch an der glatten mittleren Hauptsaugplatte 7a an, steht aber gegenüber der unteren Außensaugplatte 13a mit der Ausnehmung 48, welche der Gestalt des Vorsprunges 17 entspricht. Hier im Zustand des Zuschnittes 8' ist bereits eine derart weit fortgeschrittene Vorwärmung erreicht, daß der Zuschnitt 8' eine kleine Dehnung mitmachen kann. Eine solche ist notwendig, weil die oben beschriebene Öffnung 50 hergestellt werden muß, anderenfalls beim Tiefziehen keine gasdichte Anpassung an dieser Stelle möglich wäre.

Aus der Position III in Figur 4 fahren die Wärmebacken gemäß Pfeil 15' zusammen und kommen in die Position III, Figur 5. Jetzt erfolgt der übliche Saugwechsel: Es wird auf der Seite des Vorschubwärmebackens 5 belüftet, damit die Position III in Figur 6 erreicht werden kann, in welcher die beiden Backen 5 und 14 wieder getrennt sind. Jetzt kann der Vorschubwärmebacken 5 wieder nach oben gefahren werden, um die Position III, Figur 7 zu erreichen. Der zu erwärmende Zuschnitt 8 ist immer noch eben. Fahren nun aber in Richtung des Pfeiles 15' die Wärmebacken 14 und 5 wieder zusammen und wird der Zustand der Position III, Figur 8 erreicht, dann ist der Rand des Zuschnittes 8 nahe seiner oberen Kante um den Kegelstumpf 17 herum verformt, denn durch das Hochfahren des Vorschubwärmebackens 5 aus III, Figur 6 in III, Figur 7 ist die untere Hauptsaugplatte 7b der unteren Außensaugplatte 13a gegenüber angeordnet worden.
Öffnet sich nun der Außenwärmebacken 14 wieder nach links, dann erreicht man die Position III, Figur 3. Von dort bewegt sich der Vorschubwärmebacken 5 nach unten, so daß der Zuschnitt 8 die Position IV, Figur 4 erreicht. Das Tiefziehwerkzeug 16 befindet sich in allen Figuren unten, denn er ist nicht in der Höhe vertikal sondern nur in Richtung des Pfeiles 20 translatorisch horizontal bewegbar. Dieses Tiefziehwerkzeug 16 nähert sich dann nach rechts dem Vorschubwärmebacken 5 und gelangt in die Klemmposition IV, Figur 5. Man kann die Lage der unteren Hauptsaugplatte 7b mit den zahlreichen Ansätzen 17 anhand der Figuren 10 und 11 erkennen. In der Klemmposition ist infolge dieses Verformens um den Vorsprung 17 herum ein gasdichter Klemmzustand erreicht. Nun kann Vakuum an das Tiefziehwerkzeug 16 angelegt werden, so daß sich der erwärmte Zuschnitt 8 in die Position IV, Figur 5 bewegt. In anderer Darstellung ist dieser in Figur 12 gezeigt.

Nach dem Tiefziehen in der Position IV, Figur 5 wird nun entformt, indem das Tiefziehwerkzeug 16 wieder vom Vorschubwärmebacken 5 nach links fortbewegt wird und somit die Position IV, Figur 6 erreicht ist. Danach kann sich wieder der Vorschubwärmebacken 5 nach oben bewegen und die Position Figur 7 erreichen.

Im Falle der Herstellung einer Packung aus zwei Schalen bewegt sich nun das rechte Tiefziehwerkzeug 16b in die Mitte auf die Symmetrieebene 37 und der linke Backen 16 nach rechts auf dieselbe Ebene 37 zu, so daß sie schließen, wie in Positionen IV, Figur 8 und Figur 9 gezeigt ist. (Gleichzeitig wird in den nächst höheren Positionen wieder der nächste Zuschnitt 8 bearbeitet).

Nach dem Zusammenschweißen des randförmigen Streifens der beiden Halbschalen unter Einformung der Öffnung mittels Zapfen 25 ist die Packung fertiggestellt und kann entformt werden. Hierfür bewegen sich beide Tiefziehwerkzeuge 16 und 16b voneinander fort nach links bzw. rechts, und aus der Luftdruckleitung 24b ausströmende Luft preßt die fertige Packung vom Öffnungsformstück 24 ab und fördert sie in die in Position V in Figur 1 gezeigte Position auf das Transportband 27. In Figur 2 sieht man nun, wie die Reihe der gefertigten Packungen auf dem Transportband steht und in Richtung Pfeil 44 abgefördert werden kann.

Mit dem erfindungsgemäßen Plattenaufbau und Kontaktwärmeverfahren ist es leicht möglich, beim Tiefziehvorgang die gewünschte und häufig notwendige Wärmeverteilung zu bewerkstelligen. Bei einem ebenen, plattenförmigen Zuschnitt ergibt sich dadurch ein bestimmtes Wärmemuster. Damit sollen vor allem gleichmäßige Wandstärken des Tiefziehteiles, d.h. des Endproduktes, erreicht werden.

Das tiefziehfähige Kunststoffmaterial für die mit der erfindungsgemäßen Vorrichtung herstellbare neue Packung kann ein thermoplastischer Kunststoff sein, z.B. Polypropen. Auch PVC kann als solcher Kunststoff dienen, wobei Polypropen in der Technik weitgehend auch als Polypropylen bekannt ist. Die erfindungsgemäße Packung besteht dann aus einwandfrei wiederaufarbeitbaren und leicht verrottbaren Teilen und Materialien (im Gegensatz zu Verbundmaterialien - Papier/Kunststoff). Bei einer besonders bevorzugten Ausführungsform kann man das Kunststoffmaterial, z.B. das Polypropen, auch füllen, wobei als Füllstoffe hier an Kreide, Glimmer, Talkum, Gips oder dergleichen gedacht ist. In der Praxis haben sich Füllgrade von bis zu 70 %, vorzugsweise 60 %, als günstig erwiesen. Es hat sich gezeigt, daß derartige gefüllte Kunststoffmaterialien einerseits leicht verrottbar sind, natürlich auch ohne weiteres und nach einfachen Methoden wieder aufgearbeitet bzw. rezykliert werden können und andererseits die Eigenschaften eines Kunststoffes nicht beeinträchtigen, so daß der artige gefüllte Kunststoffmaterialien insbesondere tiefziehfähig und auch siegelfähig sind.

## Patentansprüche

1. Vorrichtung zum Verformen eines Zuschnittes (8) aus tiefziehfähigem Kunststoff mit relativ zueinander (Pfeil 20) bewegbaren Formwerkzeug (16, 16b) und Gegenbacken (5), wobei als Gegenbacken und zur Vorwärmung des Zuschnittes (8) eine an einem beheizbaren Hauptträger (6) befestigte, Vakuum- und/oder Druckeinrichtungen aufweisende, vordere Hauptsaugplatte (7b) vorgesehen ist, welche zusammen mit dem beheizbaren Hauptträger (6) zum Transportieren des Zuschnittes (8) in Vorschubrichtung als Vorschubwärmebacken (5) in eine Richtung (Doppelpfeil 21) senkrecht zur Bewegungsrichtung (Doppelpfeil 20) des Formwerkzeuges (16, 16b) mittels einer Hubvorrichtung (38) intermittierend bewegbar ist, dadurch gekennzeichnet, daß zum Tiefziehen einer einseitig offenen Schale (8b) aus dem Zuschnitt (8) das Formwerkzeug (16, 16b) ein Tiefziehwerkzeug (16, 16b) ist, daß im Abstand (a) von der vorderen Hauptsaugplatte (7b) am Hauptträger (6) mindestens eine weitere mittlere Hauptsaugplatte (7a) als Vorschubwärmebacken (5) befestigt ist und daß neben dem Tiefziehwerkzeug (16, 16b) und im Abstand (a) von diesem an seiner Außenseite ein parallel zu dessen Bewegungsrichtung (Doppelpfeil 20) intermittierend bewegbarer (Doppelpfeil 20) Außenwärmebacken (14) mit Außenträger (10) und Außensaugplatte (13, 13a) derart angeordnet ist, daß der Außenwärmebacken (14) zur Aufnahme des Zuschnittes (8) von der jeweils in Vorschubrichtung hinteren bzw. mittleren Hauptsaugplatte (7a) und dann zur Übergabe auf die jeweilige vordere Hauptsaugplatte (7b) vorgesehen ist; - daß der Hauptträger (6) zur Bewegung des Zuschnittes (8) von der hinteren Position dient, in welcher die Außensaugplatte (13, 13a) arbeitet, zu einer vorderen Position, in welcher das Tiefziehwerkzeug (16) arbeitet; und - daß Außensaugplatte (13, 13a) und Hauptsaugplatte (7a, 7b) für die zusätzliche Erwärmung des Zuschnittes (8) beim Vorerwärmen sich eine Zeit lang gegenüberstehen, so daß die beheizbaren Saugplatten (7, 7a, 7b, 13, 13a) den Zuschnitt (8) stufenweise ansaugen, erwärmen, transportieren und abblasen.

2. Vorrichtung nach Anspruch 1, dadurch gekennzeichnet, daß der Vorschubwärmebacken (5) in Richtung (Doppelpfeil 21) seiner oszillierenden Bewegung in gleichen Abständen (a) wenigstens drei Hauptsaugplatten (7, 7a, 7b) aufweist und der Außenwärmebecken (14) in Bewegungsrichtung (Doppelpfeil 21) des Vorschubwärmebackens (5) im gleichen Abstand (a), in welchem die Hauptsaugplatten (7, 7a, 7b) am Hauptträger (6) des Vorschubwärmebackens (5) befestigt sind, wenigstens zwei Außensaugplatten (13, 13b) aufweist.

3. Vorrichtung nach einem der Ansprüche 1 oder 2, dadurch gekennzeichnet, daß der Außenwärmebacken (14) aus einem Außenträger (10) aufgebaut ist, an welchem wenigstens zwei Außensaugplatten (13) über Außenheizkörper (12) befestigt sind, wobei vorzugsweise zwischen Außenträger (10) und jeweiligem Außenheizkörper (12) eine Wärmeisolation (11) vorgesehen ist.

4. Vorrichtung nach einem der Ansprüche 1 bis 3, dadurch gekennzeichnet, daß die Hauptsaugplatten (7, 7a, 7b) paarweise auf gegenüberliegenden Seiten des Hauptträgers (6) befestigt sind, entsprechend zwei Außenwärmebacken (14) mit Außenträger (10) und dem Vorschubwärmebacken (5) zugewandten Außensaugplatten (13, 13a) angeordnet sind und auch zwei einander gegenüberliegende Tiefziehwerkzeuge (16, 16b) vorgesehen sind.

5. Vorrichtung nach einem der Ansprüche 1 bis 4, dadurch gekennzeichnet, daß an einem Rand (46) der vorderen Hauptsaugplatte (7b) ein Vorsprung (17) zur Auswölbung des Zuschnittes (8) und am entsprechenden Rand (47) der vorderen Außensaugplatte (13a) eine kongruente Ausnehmung (48) angeordnet ist.

6. Vorrichtung nach Anspruch 5, dadurch gekennzeichnet, daß die Aussparung (49) des Tiefziehwerkzeuges (16, 16b) im Querschnittseiner Bewegungsebene (Doppelpfeil 20) etwa dreieckförmig ist und der Vorsprung (17) der Hauptsaugplatte (7b) in derselben Querschnittsebene halbkreisförmig ist, wobei der Vorsprung (17) bzw. die diesen aufnehmende Ausnehmung (48) vorzugsweise kegelförmig derart ist, daß der Kegel sich zum Rand (46, 47) der betreffenden Platte (7b, 13a) hin öffnet.

7. Vorrichtung nach einem der Ansprüche 1 bis 6, dadurch gekennzeichnet, daß an der Vorderseite des Hauptträgers (6) ein Öffnungsformstück (24), vorzugsweise mit einem Zapfen (25), welcher in den Innenraum (49) des Tiefziehwerkzeuges (16, 16b) reicht, angebracht ist.

8. Vorrichtung nach einem der Ansprüche 5 bis 7, dadurch gekennzeichnet, daß der Vorschubwärmebacken (5) und der Außenwärmebacken (14) im wesentlichen die Gestalt einer rechteckigen Platte haben, daß mehrere Tiefziehwerkzeuge (16, 16b), sich über die Länge (L) der rechteckigen Platte erstreckend, aneinander befestigt sind und entsprechend deren Anzahl eine Vielzahl von Vorsprüngen (17) bzw. Ausnehmungen (48) in den Saugplatten (7b, 13a) vorgesehen sind.

9. Vorrichtung nach einem der Ansprüche 1 bis 8, dadurch gekennzeichnet, daß der Hauptträger (6) vertikal derart angeordnet ist, daß die vordere Hauptsaugplatte (7b) unten als untere Hauptsaugplatte (7b) unter die mittlere Hauptsaugplatte (7a) zu liegen kommt.

## Claims

1. Apparatus for shaping a blank (8) of deep-drawable plastics material, with mutually relatively movable (arrow 20) shaping tool (16, 16b) and co-operating jaw (5), wherein a front main suction plate (7b) which is feed to a heatable main carrier (6) and which has vacuum and/or pressure devices is provided as the co-operating jaw and for preheating the blank (8), which main suction plate (7b), together with the heatable main carrier (6), for the purposes of transporting the blank (8) in the feed direction, as a feed heating jaw (5), is intermittently movable by means of a stroke device (38) in a direction (double-headed arrow 21) perpendicular to the direction of movement (double-head arrow 20) of the shaping tool (16, 16b), characterised in that for deep-drawing a dish (8b) which is open at one side from the blank (8) the shaping tool (16, 16b) is a deep-drawing tool (16, 16b), that at least one further central main suction plate (7a) is fired as a feed heating jaw (5) on the main carrier (6) at a spacing (a) from the front main suction plate (7b) and that arranged beside the deep-drawing tool (16, 16b) and at a spacing (a) therefrom at its outside is an outside heating jaw (14) which is intermittently movable (double-headed arrow 20) parallel to its direction of movement (double-headed arrow 20) with outside carrier (10) and outside suction plate (13, 13a) in such a way that the outside heating jaw (14) is provided for receiving the blank (8) from the main suction plate (7a) which is respectively the rear or central plate in the feed direction and then for transfer thereof onto the respective front main suction plate (7b), that the main carrier (6) serves to move the blank (8) from the rear position in which the outside suction plate (13, 13a) operates to a front position in which the deep-drawing tool (16) operates, and that the outside suction plate (13, 13a) and the main suction plate (7a, 7b) are disposed opposite each other for a time for additional heating of the blank (8) in the preheating operation so that the heatable suction plates (7, 7a, 7b, 13, 13a) step-wise suck, heat, transport and blow off the blank (8).

2. Apparatus according to claim 1 characterised in that the feed heating jaw (5) has at least three main suction plates (7, 7a, 7b) in the direction (double-headed arrow 21) of its oscillating movement at equal spacings (a) and the outside heating jaw (14) has at least two outside suction plates (13, 13b) at the same spacing (a) as that at which the main suction plates (7, 7a, 7b) are fixed to the main carrier (6) of the feed heating jaw (5), in the direction of movement (double-headed arrow 21) of the feed heating jaw (5).

3. Apparatus according to one of claims 1 and 2 characterised in that the outside heating jaw (14) is made up from an outside carrier (10) to which at least two outside suction plates (13) are fined by way of outside heating bodies (12), wherein thermal insulation (11) is preferably provided between the outside carrier (10) and the respective outside heating body (12).

4. Apparatus according to one of claims 1 to 3 characterised in that the main suction plates (7, 7a, 7b) are fined in pairs on opposite sides of the main carrier (6), two outside heating jaws (14) with outside carrier (10) and outside suction plates (13, 13a) which are towards the feed heating jaw (5) are arranged accordingly and there are also two mutually oppositely disposed deep-drawing tools (16, 16b).

5. Apparatus according to one of claims 1 to 4 characterised in that a projection (17) for outward curving of the blank (8) is arranged at an edge (46) of the front main suction plate (7b) and a congruent recess (48) is arranged at the corresponding edge (47) of the front outside suction plate (13a).

6. Apparatus according to claim 5 characterised in that the recess (49) of the deep-drawing tool (16, 16b) is approximately triangular in the cross-section of its plane of movement (double-headed arrow 20) and the projection (17) on the main suction plate (7b) is semicircular in the same cross-sectional plane, wherein the projection (17) or the recess (48) receiving same is preferably conical in such a way that the cone opens towards the edge (46, 47) of the respective plate (7b, 13a).

7. Apparatus according to one of claims 1 to 6 characterised in that mounted at the front side of the main carrier (6) is an opening mould portion (24), preferably with a pin (25) which extends into the interior (49) of the deep-drawing tool (16, 16b).

8. Apparatus according to one of claims 5 to 7 characterised in that the feed heating jaw (5) and the outside heating jaw (14) are substantially in the form of a rectangular plate, that a plurality of deep-drawing tools (16, 16b) are fixed to each other, extending over the length (L) of the rectangular plate, and corresponding to the number thereof there is a plurality of projections (17) and recesses (48) respectively in the suction plates (7b, 13a).

9. Apparatus according to one of claims 1 to 8 characterised in that the main carrier (6) is arranged vertically in such a way that the front main suction plate (7b) comes to lie at the bottom as the lower main suction plate (7b) under the central main suction plate (7a).

## Revendications

1. Dispositif, destiné à la déformation d'une pièce découpée (8) en une matière synthétique apte à l'emboutissage, comportant : un outil de formage (16, 16b) et un contre-mors (5) mobiles l'un par rapport à l'autre (flèche 20), une plaque d'aspiration principale avant (7b) étant prévue comme contre-mors et pour le prééchauffement de la pièce découpée (8), cette plaque d'aspiration principale étant fixée à un support principal (6) pouvant être chauffé, présentant des dispositifs de vide et/ou de pression, et étant susceptible d'être mue de manière intermittente au moyen d'un dispositif de course (38), en commun avec le support principal (6) pouvant être chauffé, pour le transport de la pièce découpée (8) dans la direction d'avance, en tant que mors d'avance chauffant (5), dans une direction perpendiculaire (flèche double 21) à la direction de mouvement (flèche double 20) de l'outil de formage (16, 16b), caractérisé en ce que, pour l'emboutissage d'une coquille ouverte d'un côté (8b) à partir de la pièce découpée (8), l'outil de formage (16, 16b) est un outil d'emboutissage (16, 16b), en ce que dans l'espacement (a) de la plaque d'aspiration principale avant (7b) au support principal (6), est fixée au moins une autre plaque d'aspiration principale centrale (7a) comme mors d'avance chauffant (5), et en ce qu'à côté de l'outil d'emboutissage (16, 16b) et dans l'espacement (a) de celui-ci à son côté extérieur, est agencé un mors chauffant extérieur (14) à support extérieur (10) et plaque d'aspiration extérieure (13, 13a), pouvant être mû, de manière intermittente, parallèlement à la direction de mouvement (flèche double 20) de l'outil d'emboutissage, de manière telle, que le mors chauffant extérieur (14) est prévu pour l'accueil de la pièce découpée (8) à partir, chaque fois, de la plaque d'aspiration principale (7a) en position arrière et centrale en se référant au sens d'avance, et ensuite pour le transfert, chaque fois, sur la plaque d'aspiration principale avant (7b); en ce que le support principal (6) sert pour le mouvement de la pièce découpée (8) de la position arrière, dans laquelle travaille la plaque d'aspiration extérieure (13, 13a), à une position avant, dans laquelle travaille l'outil d'emboutissage (16); et en ce que la plaque d'aspiration extérieure (13, 13a) et la plaque d'aspiration principale (7a, 7b) sont en regard l'une de l'autre pendant un certain temps pour l'échauffement supplémentaire de la pièce découpée (8) lors du prééchauffement, de sorte que les plaques d'aspiration (7, 7a, 7b, 13, 13a) pouvant être chauffées, par étapes, aspirent, échauffent, transportent et éjectent par soufflage la pièce découpée (8).

2. Dispositif selon la revendication 1, caractérisé en ce que le mors d'avance chauffant (5), dans la direction (flèche double 21) de son mouvement oscillant, présente, dans des espacements (a) égaux, au moins trois plaques d'aspiration principales (7, 7a, 7b), et en ce que le mors chauffant extérieur (14) présente, dans la direction de mouvement (flèche double (21) du mors d'avance chauffant (5), au moins deux plaques d'aspiration extérieures (13, 13b), dans le même espacement (a), dans lequel les plaques d'aspiration principales (7, 7a, 7b) sont fixées au support principal (6) du mors d'avance chauffant (5).

3. Dispositif selon l'une des revendications 1 ou 2, caractérisé en ce que le mors chauffant extérieur (14) est constitué d'un support extérieur (10), auquel sont fixées au moins deux plaques d'aspiration extérieures (13) par l'intermédiaire de corps chauffants extérieurs (12), une isolation thermique (11) étant de préférence prévue entre support extérieur (10) et chacun des corps chauffants extérieurs (12).

4. Dispositif selon l'une des revendications 1 à 3, caractérisé en ce que les plaques d'aspiration principales (7, 7a, 7b) sont fixées par paires sur des côtés opposés du support principal (6), en ce que deux mors chauffant extérieurs (4) à support extérieur (10) et plaques d'aspiration (13, 13a) tournées vers le mors d'avance chauffant (5), sont agencés de manière correspondante, et en ce que sont aussi prévus deux outils d'emboutissage (16, 16b) opposés l'un à l'autre.

5. Dispositif selon l'une des revendications 1 à 4, caractérisé en ce qu'à un bord (46) de la plaque d'aspiration principale avant (7b), est agencée une protubérance (17) destinée à bomber la pièce découpée (8), et en ce qu'au bord (47) correspondant de la plaque d'aspiration extérieure avant (13a), est agencé une cavité (48) congruente.

6. Dispositif selon la revendication 5, caractérisé en ce que l'évidement (49) de l'outil d'emboutissage (16, 16b), dans la section de son plan de mouvement (double flèche 20), est sensiblement de forme triangulaire, et la protubérance (17) de la plaque d'aspiration principale (7b) est de forme semi-circulaire dans le même plan de section, la protubérance (17), ou bien la cavité (48) accueillant celle-ci, étant de préférence de forme conique, de manière telle, que le cône s'ouvre en direction du bord (46, 47) de la plaque concernée (7b, 13a).

7. Dispositif selon l'une des revendications 1 à 6, caractérisé en ce qu'au côté avant du support principal (6), est adjointe une pièce de formage d'ouverture (24), comportant de préférence un tenon (25), qui s'étend dans l'espace intérieur (49) de l'outil d'emboutissage (16, 16b).

8. Dispositif selon l'une des revendications 5 à 7, caractérisé en ce que le mors d'avance chauffant (5) et le mors chauffant extérieur (14) est sensiblement la configuration d'une plaque rectangulaire, en ce que plusieurs outils d'emboutissage (16, 16b) sont fixés côte à côte en s'étendant tout au long de la longueur (L) de la plaque rectangulaire, et en ce qu'est prévu en un nombre correspondant, un grand nombre de protubérances (17), ou bien de cavités (48), dans les plaques d'aspiration (7b, 13a).

9. Dispositif selon l'une des revendications 1 à 8, caractérisé en ce que le support principal (6) est agencé vertical, de façon à ce que la plaque d'aspiration principale avant (7b) vienne se placer en bas, en tant que plaque d'aspiration principale (7b) inférieure, sous la plaque d'aspiration principale centrale (7a).
